(19) Europäisches Patentamt / European Patent Office / Office européen des brevets

(11) **EP 4 567 651 A1**

## (12) DEMANDE DE BREVET EUROPEEN

(43) Date de publication:
**11.06.2025 Bulletin 2025/24**

(21) Numéro de dépôt: **24196804.9**

(22) Date de dépôt: **27.08.2024**

(51) Classification Internationale des Brevets (IPC):
***G06F 21/62*** *(2013.01)*

(52) Classification Coopérative des Brevets (CPC):
**G06F 21/6254; G06F 21/6245**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **05.12.2023 FR 2313604**

(71) Demandeur: **Coachmesec Consulting**
**92220 Bagneux (FR)**

(72) Inventeur: **SONDECK, Louis Philippe**
**92220 Bagneux (FR)**

(74) Mandataire: **Tzeuton Tchangoum, Eric Olivier**
**SOTERYAH IP**
**199 rue Hélène Boucher**
**34170 Castelnau-Le-Lez (FR)**

(54) **SYSTÈME ET PROCÉDÉ D'ANONYMISATION DES DONNÉES EN FONCTION DES RISQUES DE CHAQUE DONNÉE**

(57) L'invention concerne un système d'anonymisation de données comprenant :
- un moyen d'identification des données (M1) et d'attribution d'un niveau d'exposition vis-à-vis de personnes internes ou externes à l'organisation de l'utilisateur ;
- un moyen d'identification d'évènements redoutés (M2) et leur gravité ;
- un moyen d'évaluation des risques de ré-identification de personne (M3) ;
- un moyen d'évaluation de niveau d'exploitabilité (M4) ;
- un moyen d'évaluation de risque global (M5) du jeu de données dans lequel sont identifiées les données ayant un niveau d'exploitabilité significatif et/ou un niveau de gravité significatif ; et
- un moyen de correction (M6) des données et de contremesures (CM1, CM3, CM4, CM5, CM6) ou de transformation des données ayant un niveau d'exploitabilité et/ou de gravité significatif de sorte à limiter ledit niveau.

L'invention concerne également un programme sur la base d'un tel procédé.

Fig. 2

EP 4 567 651 A1

**Description**

L'invention se rapporte au domaine des systèmes et procédés de traitement et d'anonymisation des données personnelles et des moyens de ré-identification de personnes.

Les données personnelles sont devenues un élément précieux dans les sciences et technologies. Elles sont notamment utiles pour la réalisation d'études cliniques, le test et la validation d'applications informatiques, et sont cruciales dans le domaine de l'apprentissage automatique en intelligence artificielle.

Malheureusement, l'utilisation des données personnelles est, de nos jours, freinés par la mise en oeuvre de législations relatives à la protection des données personnelles (par exemple: RGPD, CCPA, HIPAA, ...). Cette législation précise notamment que pour utiliser les données personnelles aux fins décrites précédemment, il faut les anonymiser, c'est à dire, les transformer en données qui ne sont plus personnelles.

Ainsi, plusieurs mesures ont été proposées pour anonymiser les données, mais ne sont pas pleinement satisfaisantes. Une stratégie usuelle est la pseudonymisation (dont le masquage de données ("data masking") est une variante) qui consiste à remplacer un attribut par un autre, visant ainsi à limiter le risque d'identification d'un individu. En d'autres termes, des données directement ou indirectement identifiantes (comme le nom, le prénom, l'adresse mail, l'adresse postale) sont remplacées par des pseudonymes, (comme par exemple un alias, un numéro, etc...).

Une autre stratégie est l'utilisation des données dites synthétiques à la place de données réelles afin de protéger les personnes. Les données synthétiques sont des données générées sur la base des données originales, en s'appuyant sur des modèles d'intelligence artificielle ; elles ont la particularité de conserver les propriétés des données réelles tout en ne contenant pas d'informations réelles.

Malheureusement, la pseudonymisation n'est pas pleinement satisfaisante car elle est considérée comme réversible. En cas de soustraction d'un jeu de données pseudonymisées, il est possible que l'auteur reconstitue les données personnelles de manière relativement facile. Ainsi, les données pseudonymisées sont toujours considérées comme des données personnelles par la réglementation. Par ailleurs, les données synthétiques sont difficilement utilisables car il est en générale difficile de produire des jeux de données qui reflètent réellement les données originales, ce qui entraine un manque de fiabilité des données synthétiques. De plus, la génération de données synthétiques est une opération chronophage qui nécessite de créer un nouveau modèle pour chaque jeu de données.

L'anonymisation au sens strict est définie à l'échelle européenne par le Groupe de travail Article 29 sur la protection des données (en abrégé G29). Selon ce groupe, une solution d'anonymisation doit être construite au cas par cas et adaptée aux usages prévus. Pour aider à évaluer une bonne solution d'anonymisation, le G29 propose trois critères :

- l'individualisation : est-il toujours possible d'isoler un individu après l'anonymisation ?
- la corrélation : est-il possible de relier entre eux des ensembles de données distincts concernant un même individu ?
- l'inférence : peut-on déduire des informations sur un individu ?

Ainsi, pour le G29, un ensemble de données pour lequel il n'est possible ni d'individualiser ni de corréler ni d'inférer est a priori anonyme. Par ailleurs, un ensemble de données pour lequel au moins un des trois critères n'est pas respecté ne pourra être considéré comme anonyme qu'à la suite d'une analyse détaillée des risques de ré-identification. Les outils permettant de mettre en oeuvre les préconisations du G29 ne sont pas proposés dans l'art antérieur.

Malheureusement, les critères présentés dans l'avis du G29 sont trop strictes et inutilisables en l'état, car produisent systématiquement des risques trop élevés, conduisant à appliquer une anonymisation trop rigoureuse, ce qui a tendance à détruire considérablement les données en les rendant inutilisables sous une forme anonymisée.

Face à ce constat, la CNIL propose 2 façons d'évaluer les risques : soit respecter scrupuleusement ces critères, soit effectuer une analyse de risque de ré-identification. Cependant, la CNIL ne donne que très peu d'indications sur comment mener cette analyse de risque de ré-identification.

Les principales difficultés sont 1) de pouvoir calculer les scores de réidentification selon les 3 critères du G29 ; 2) de pouvoir expliciter les scores calculés selon des risques de réidentification ; 3) de les intégrer dans une approche d'analyse de risques suivant le modèle EBIOS, préconisé par la CNIL.

Ainsi, un objectif de la présente invention est de remédier aux défauts de l'art antérieur, et notamment de proposer une solution d'anonymisation des données limitant significativement le risque de ré-identification tout en permettant l'usage des données sous une forme anonymisée. L'invention s'appuie sur un outil d'évaluation des risques d'individualisation, de corrélation et d'inférence, permettant, selon la valeur du risque, de ne transformer que les données impliquant le plus de risques pour les personnes. Ainsi, l'outil permet une faible dégradation du jeu de données afin de préserver ses qualités sous une forme anonymisée.

Pour atteindre ces objectifs, l'invention propose un système d'anonymisation de données prenant en entrée au moins un jeu de données dans une organisation, le système d'anonymisation comprenant :

- un moyen de caractérisation des données sur la base d'un "schéma de données", permettant de définir pour chaque donnée, un nom, un niveau d'exposition (permettant d'évaluer la possibilité d'accès à la donnée selon qu'elle peut être accessible depuis l'extérieur de l'organisation ou depuis l'intérieur), et de préférence un type de sensibilité de la donnée ;
- un moyen d'identification d'évènements redoutés permettant de définir pour chaque donnée, une échelle de gravité se décomposant de préférence en un type d'évènement redouté et/ou une échelle d'impact de cet évènement, évaluée sur la base d'au moins un critère donné ayant un nombre de variables ;
- un moyen d'évaluation des critères légaux d'anonymisation, permettant de définir pour chaque donnée, un score d'individualisation, un score de corrélation, et un score d'inférence ;
- un moyen d'évaluation d'un niveau d'exploitabilité déterminé sur la base d'une combinaison des niveaux d'exposition et des scores d'individualisation, de corrélation et d'inférence ;
- un moyen d'évaluation de risque global du jeu de données sur la base d'hypothèses de risques construites en s'appuyant sur les données ayant un niveau d'exploitabilité significatif et une échelle de gravité significative ; et
- de préférence un moyen de réduction des risques comprenant des propositions de contre-mesures ou de transformations permettant de limiter le niveau d'exploitabilité et/ou l'échelle de gravité des données les plus à risque.

Un niveau d'exploitabilité significatif s'entend comme un niveau d'exploitabilité supérieur à une moyenne, de préférence un niveau d'exploitabilité élevé. Une échelle de gravité significative s'entend comme une échelle de gravité supérieure à une moyenne, de préférence une échelle de gravité élevée.

Avantageusement, l'invention permet d'évaluer le risque des différentes données d'un jeu de données et de transformer une partie des données ; celles impliquant un risque significatif, de sorte que le jeu de données est anonymisé sans en dégrader significativement sa qualité.

L'invention est en outre un outil digital pour analyser les données, et pour prouver que les risques inhérents aux données utilisées ont été valablement évalués. L'invention permet de prouver de manière simplifiée que l'évaluation des risques a été faite, et est applicable à de gros volumes de données (centaines, voire milliers de variables).

Selon une variante, le moyen de caractérisation permet d'attribuer à chaque donnée un niveau d'exposition sur la base de variables dont le nombre peut varier entre 2 et 10, de préférence quatre variables, plus préférentiellement parmi :

- un niveau "interne restreint" si la donnée est accessible à un nombre restreint de personnes internes à l'organisation de l'utilisateur ;
- un niveau "interne élargi" si la donnée est accessible à des personnes quelconques internes à l'organisation de l'utilisateur ;
- un niveau "externe restreint" si la donnée est accessible à un nombre restreint de personnes externes à l'organisation de l'utilisateur ;
- un niveau "externe élargi" si la donnée est accessible à des personnes quelconques externes à l'organisation de l'utilisateur.

Cela permet d'évaluer le risque différemment selon l'accessibilité à la donnée par un tiers pour être plus précis dans l'évaluation des risques, et améliorer la qualité des données anonymisées. Le niveau d'exposition permet de calculer plus précisément le critère de corrélation et d'identifier les données les plus à risque.

Selon une variante, le moyen de caractérisation permet d'attribuer à chaque donnée un type de sensibilité sur la base de trois variables, de préférence parmi :

- un type donnée sensible si la donnée peut avoir des impacts personnels sur la personne concernée ;
- un type donnée perçue comme sensible si la donnée est perçue comme sensible ;
- un type donnée courante si la donnée est usuelle et non sensible.

Cela permet de discriminer les sensibilités des différentes données pour mieux évaluer le risque et améliorer la qualité des données anonymisées.

Selon une variante, le moyen d'identification d'évènements redoutés permet d'attribuer au moins une échelle de gravité à quatre variables, de préférence : mineur, significatif, grave, et critique.

Cela permet d'évaluer facilement la gravité de la divulgation de chaque donnée et du jeu de données. Cela permet en outre de noter ces évènements pour chaque donnée et de les prévoir dans un rapport.

Selon une variante, le moyen d'évaluation des critères légaux d'anonymisation permet d'attribuer des scores dont le nombre de niveaux peut varier entre 3 et 5, de préférence : faible, modéré, élevé, très élevé.

Cela permet de simplifier l'évaluation du risque de ré-identification.

Selon une variante, le moyen d'évaluation de niveau d'exploitabilité permet d'attribuer des niveaux d'exploitabilité dont le nombre de valeurs peut varier entre 3 et 5, de préférence très difficile, difficile, facile, très facile.

Cela permet de simplifier l'évaluation du risque d'exploitabilité des données par un tiers.

Selon une variante, le système comprend en outre un moyen de génération d'un code couleur avec une échelle d'importance pour au moins un niveau évalué.

Cela permet de visualiser rapidement la dangerosité d'un risque évalué.

Selon une variante, le système comprend en outre un moyen d'édition d'un rapport reprenant entre autres les risques identifiés et/ou les contre-mesures.

Cela permet de prouver à un tiers ou à une institution que les risques ont été évalués et des mesures ont été prises pour les minimiser.

Un autre objet de l'invention concerne un procédé d'anonymisation de données personnelles dans au moins un jeu de données d'un utilisateur, le procédé d'anonymisation comprenant :

- une étape de caractérisation des données sur la base d'un schéma de données dans lequel à chaque donnée est attribué un nom, un niveau d'exposition permettant d'évaluer la possibilité d'accès à la donnée selon qu'elle peut être accessible depuis l'extérieur de l'organisation ou depuis l'intérieur, et de préférence un type de sensibilité de la donnée ;
- une étape d'identification d'évènements redoutés dans laquelle à chaque donnée est attribuée une échelle de gravité se décomposant de préférence en un type d'évènement redouté et/ou une échelle d'impact de cet évènement, évaluée sur la base d'au moins un critère donné ayant un nombre de variables, de préférence au moins l'un parmi le plan matériel, corporel, moral ;
- une étape d'évaluation des critères légaux d'anonymisation dans lequel à chaque donnée est attribué un score d'individualisation, un score de corrélation, et un score d'inférence ;
- une étape d'évaluation d'un niveau d'exploitabilité sur la base d'une combinaison des niveaux d'exposition et des scores d'individualisation, de corrélation, et d'inférence ;
- une étape d'évaluation de risque global du jeu de données sur la base d'hypothèses de risques construites en s'appuyant sur les données ayant un niveau d'exploitabilité significatif et une échelle de gravité significative ; et
- une étape de réduction des risques comprenant des propositions de contre-mesures ou de transformations permettant de limiter le niveau d'exploitabilité et/ou l'échelle de gravité des données les plus à risque.

L'invention a en outre trait à un programme d'ordinateur comprenant des instructions de code de programme pour l'exécution des étapes d'un procédé d'anonymisation de données selon l'invention, lorsque ledit programme fonctionne sur un ordinateur.

L'invention sera davantage détaillée par la description de modes de réalisation non limitatifs, et sur la base des figures annexées illustrant des modes de réalisation préférés de l'invention, dans lesquelles :

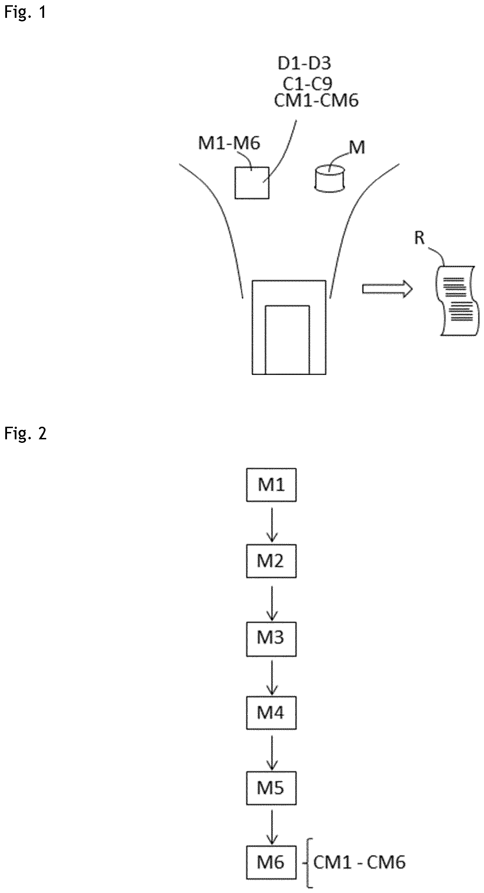

- [Fig.1] illustre schématiquement un système d'anonymisation selon un mode de réalisation préféré de l'invention, et une édition d'un rapport pouvant être physique ou électronique ;
- [Fig.2] illustre schématiquement un procédé d'anonymisation selon un mode de réalisation ;
- [Fig.3] illustre schématiquement un premier exemple d'analyses de risques de données d'un jeu de données au moyen de l'invention, avant et après application d'un maximum de contremesures selon l'invention pour un hacker interne ou un hacker externe ; et
- [Fig.4] illustre schématiquement un deuxième exemple d'analyses de risques de données similaire à celui de la figure 4 avec des contremesures minimales selon l'invention.

L'invention concerne un système et un procédé d'anonymisation de données personnelles dans au moins un jeu de données d'un utilisateur.

L'invention est mise en oeuvre par des moyens informatiques, par exemple via un ordinateur, un serveur, une tablette, un téléphone intelligent ou autre ou une combinaison d'au moins deux de ces éléments.

Le système d'anonymisation comprend plusieurs moyens matériels et logiciels permettant de charger et évaluer les données, de préférence les transformer ou proposer des contre-mesures pour améliorer la sécurité du jeu de données.

Le système d'anonymisation comprend un moyen pour charger au moins un jeu de données à analyser. Il s'agit en particulier d'un module de lecture d'un fichier comprenant ledit jeu de données. Le jeu de données peut être dans un format de fichier quelconque, par exemple en format informatique de classeur (dit « .csv »).

Le système d'anonymisation comprend en outre un moyen d'identification d'un schéma de données. Le schéma de donné est illustré dans le tableau 1. Dans ce schéma de données, à chaque donnée est attribué un nom, de préférence un libellé, un niveau d'exposition vis-à-vis de personnes internes ou externes à l'organisation de l'utilisateur, et de préférence un type de sensibilité de la donnée.

Tableau 1 : exemple de schéma de données

| # | Nom | Libellé | Exposition | Sensibilité |
|---|---|---|---|---|
| 1 | Antibiogramme | Molécule X | 1-Interne restreint | courante |
| 2 | Espèce bactérienne | Espèce Y | 1-Interne restreint | courante |
| 3 | Type de prélèvement | 8 modalités | 1-Interne restreint | courante |
| 4 | Date de prélèvement | Décalées d'un nombre aléatoire | 2-Interne élargi | courante |
| 5 | Spectre MALDI-ToF | Vecteur unique 1000 valeurs | 1-Interne restreint | courante |
| 6 | Date de naissance | Arrondies par 5 ans | 4- Externe élargi | courante |
| 7 | Sexe | Deux catégories | 4- Externe élargi | courante |

Dans le domaine de la santé ou des études cliniques, le nom de la donnée est par exemple antibiogramme ; espèce bactérienne ; type de prélèvement ; date de prélèvement ; tel ou tel nom de test, par exemple spectre MALDI-ToF ; date de naissance, sexe. Le "Nom" peut concerner un numéro d'identification, un numéro de permis, un nombre de points dans le domaine de la sécurité routière, ou le nom d'un test quelconque dans un autre domaine technique.

Outre le "Nom", on peut prévoir de définir le "Libellé" pour entrer une description sommaire de la donnée.

Le niveau d'"Exposition" d'un attribut évalue la facilité pour un hacker d'obtenir l'information en question à partir d'un autre jeu de données. Pour prendre un exemple, il est vraisemblablement plus difficile d'obtenir le "Type de prélèvement" d'une personne dans un autre jeu de données que de retrouver sa "Date de naissance" ou son "Sexe".

Le niveau d'"Exposition" est discriminé en fonction des tiers internes à l'organisation utilisant le jeu de donnée, et ceux étant internes ou externes à cette organisation n'ayant pas le droit d'accéder aux données. Par ailleurs, le niveau d'exposition est de préférence identifié par moins d'une dizaine de variables discrètes, de préférence quatre variables .

On peut classer le niveau d'exposition en quatre catégories principales dans un ordre croissant de niveau :

- interne-restreint ;
- interne-élargi ;
- externe-restreint ; et
- externe-élargi.

Concernant le niveau interne-restreint : les attributs avec un niveau d'exposition interne-restreint sont accessibles uniquement à un nombre limité de personnes autorisées à les consulter. Ces attributs peuvent inclure des informations médicales, des données financières sensibles, ou des informations personnelles délicates.

En particulier, on parlera d'un niveau « interne restreint » si la donnée est accessible à un nombre restreint de personnes internes à l'organisation de l'utilisateur, par exemple les personnes appartenant à un service particulier.

Un code couleur de type feu tricolore peut être généré suivant le niveau d'exposition. Le niveau interne restreint est par exemple vert V car les données de cette catégorie sont moins susceptibles de se retrouver dans d'autres jeux de données.

Par exemple, l'espèce bactérienne, les résultats d'analyse, les opérations bancaires peuvent avoir un niveau interne restreint, et un code couleur vert V.

Concernant le niveau interne-élargi : les attributs ayant un niveau d'exposition interne-élargi sont accessibles à l'intérieur de l'organisation, par des employés appartenant à plusieurs services ou par tous les employés. Ces attributs peuvent inclure des données d'identification des employés, des rapports d'activités internes, mais également des données de personnes concernées (par exemple : des patient, des clients, etc.) transitant d'un service à un autre (par exemple : des identifiants client/patient, tailles, poids, pressions artérielles, ...)

En particulier, une donnée a ce niveau d'exposition si elle est accessible à des personnes quelconques internes à l'organisation ou plusieurs services différents. Le code couleur est par exemple jaune J.

Concernant le niveau externe-restreint : les attributs avec un niveau d'exposition externe-restreint sont accessibles à des tiers, mais nécessitent de mener des recherches spécifiques ou des sources de données spécifiques pour y accéder. Ils peuvent inclure des informations partagées avec des partenaires commerciaux, des données d'enquête, ou des informations spécifiques à une industrie.

En particulier, une donnée a ce niveau si elle est accessible à un nombre restreint de personnes externes à l'organisation de l'utilisateur de par la complexité nécessaire pour la collecter. Il s'agit notamment de personnes pouvant connaître l'information en cause ou la trouver en menant des recherches approfondies. Par exemple, une date d'admission, une date de sortie peuvent avoir un niveau externe restreint. Le code couleur est par exemple orange O (ou orange foncé).

Concernant le niveau externe-élargi : les attributs présentant un niveau d'exposition externe-élargi sont facilement accessibles et peuvent être obtenus par des sources externes sans trop de difficulté. Ces attributs peuvent inclure des informations disponibles publiquement, telles qu'un nom, un prénom, un âge, une adresse postale, une adresse email, ou des données professionnelles générales.

En particulier, une donnée est à ce niveau si elle est accessible à des personnes quelconques externes à l'organisation de l'utilisateur, par exemple depuis les réseaux sociaux et les moteurs de recherche. Le code couleur est par exemple rouge R.

La violation des données dépend entre autres, de la capacité à croiser des jeux de données différents et donc de la capacité à retrouver dans un autre jeu de données, des données présentes dans le jeu de données anonymisé.

Dans le cadre de l'invention, on souhaite pouvoir attribuer un score compris entre 1 et 4 qui quantifie le degré d'exposition d'un attribut dans le jeu de données. Il vient assez naturellement de proposer les scores suivants : externe-élargi avec un score égal à 4 (critique), externe-restreint avec un score égal à 3 (haut), interne-élargi avec un score égal à 2 (moyen) puis interne-restreint avec un score égal à 1 (faible).

Un score d'exposition élevé peut être un signe que de la randomisation devrait être appliqué à cet attribut. Cela pourrait rendre plus difficile le fait de trouver les valeurs adéquates dans des sources externes.

Outre le niveau d'exposition, le moyen d'identification permet d'attribuer à chaque donnée un type de sensibilité à trois variables. On peut parler de type de données CNIL. On pourra distinguer :

- un type donnée sensible si la donnée concerne l'origine raciale ou ethnique, les opinions politiques, les convictions religieuses ou philosophiques ou l'appartenance syndicale, ainsi que le traitement des données génétiques, des données biométriques aux fins d'identifier une personne physique de manière unique, des données concernant la santé ou des données concernant la vie sexuelle ou l'orientation sexuelle d'une personne physique ;
- un type donnée perçue sensible si la donnée est perçue comme sensible, par exemple des données bancaires, des données biométriques, un numéro de sécurité sociale ;
- un type donnée courante si la donnée n'est ni sensible et ni perçue comme sensible.

Le risque de réidentification dépend de cette sensibilité.

Le système d'anonymisation comprend en outre un moyen d'identification d'évènements redoutés. Cette information permet de prouver que cet aspect a été évalué avant l'utilisation des données. A cet effet, à chaque donnée est attribuée une échelle de gravité pour déterminer un évènement mineur, significatif, grave ou critique à prévoir en cas de perte de la donnée. De préférence l'échelle contient moins de 10 niveaux, plus préférentiellement moins de 6, davantage préférentiellement 4 variables sont utilisées pour l'échelle de gravité. Par ailleurs, la gravité comprend de préférence un type d'évènement redouté par exemple la divulgation d'une maladie du patient, et/ou une échelle d'impact de cet évènement, évaluée sur au moins un des trois critères : matériel, corporel, moral.

Tableau 2 : exemple d'évènements redoutés

| Attribut Sensible | Evènement redouté | Matériel | Corporel | Moral | Gravité |
|---|---|---|---|---|---|
| Espèce bactérienne | Divulgation de Maladie | Mineur | Grave | Critique | Critique |

Pour une meilleure visibilité et une compréhension rapide, les évènements redoutés sont affectés à un code couleur de type feu tricolore, avec une couleur verte V pour les évènements sans gravité, une couleur jaune J et/ou orange O pour les évènements de gravités intermédiaires, et une couleur rouge R pour une gravité importante.

Le système d'anonymisation comprend en outre un moyen d'évaluation des critères de ré-identification de personnes dans lequel à chaque donnée est attribué un score d'individualisation, un score de corrélation, un score d'inférence. Dans chacun de ces cas, le score est évalué de préférence sur une échelle de moins de 10 valeurs, plus préférentiellement entre 3 et 5 valeurs, davantage préférentiellement selon les valeurs : faible, moyen, élevé, et critique. Ces scores peuvent être évalués de manière collégiale, conventionnelle ou statistique pour chaque donnée.

Tableau 3 : d'évaluation des risques de ré-identification

| # | Nom | Individualisation | Corrélation | Inférence |
|---|---|---|---|---|
| 1 | Antibiogramme | 1-Faible | 1-Faible | 2-Modéré |
| 2 | Espèce bactérienne | 3-Elevé | 1-Faible | 4-Très élevé |
| 3 | Type de prélèvement | 1-Faible | 1-Faible | 1-Faible |
| 4 | Date de prélèvement | 4-Très élevé | 3-Elevé | 4-Très élevé |

(suite)

| # | Nom | Individualisation | Corrélation | Inférence |
|---|-----|-------------------|-------------|-----------|
| 5 | Spectre MALDI-ToF | 3-Elevé | 1-Faible | 3-Elevé |
| 6 | Date de naissance | 2-Modéré | 3-Elevé | 2-Modéré |
| 7 | Sexe | 1-Faible | 3-Elevé | 1-Faible |

De même le code couleur de type feu tricolore peut être utilise. Le risque critique est rouge R ; le risque élevé, orange O ; le risque moyen, jaune J ; et le risque faible, vert V.

Le score d'individualisation peut être évalué ou calculé. L'individualisation évalue la possibilité d'isoler un individu dans le jeu de données. Elle fait référence au niveau de détail ou de spécificité des informations contenues dans chaque attribut. Certains attributs peuvent être très granulaires, fournissant des informations précises telles que la date de naissance complète ou l'adresse complète. D'autres attributs peuvent être plus généraux, avec un score d'individualisation plus faible, tels que l'année de naissance ou la ville de résidence. Le score d'individualisation des attributs peut influencer le potentiel de divulgation et le niveau de risque associé.

Il est possible de remédier à un haut score d'individualisation en appliquant de la généralisation. Cependant, il reste important de considérer la perte d'utilité des données qui peut accompagner la généralisation.

Le risque d'inférence peut être évalué ou calculé. L'inférence peut être assimilée au concept statistique de taux de discrimination (ou « discrimination rate » en langue anglaise). Il s'agit d'une mesure qui évalue la capacité d'un attribut à distinguer ou à discriminer un individu par rapport à d'autres. Il est souvent utilisé pour évaluer le risque de ré-identification des individus à partir des données anonymisées. Un attribut avec un taux de discrimination élevé peut fournir des informations permettant d'identifier ou de révéler des caractéristiques personnelles spécifiques, ce qui augmente le risque de violation de la confidentialité.

Comme pour le ratio $r_X$ obtenu pour la mesure de granularité, le taux de discrimination est une valeur dans l'intervalle [0, 1]. En notant DR cette métrique, on peut définir le score $S_{DR}$ associé de manière analogue au score de granularité :

$$S_{DR} = \lceil 4 \cdot \text{DR} \rceil$$

avec $\lceil \cdot \rceil$ la partie entière supérieure, aussi appelée "plafond".

Le critère de corrélation est évalué sur la base du niveau d'exposition et du critère d'individualisation.

Le système d'anonymisation comprend en outre un moyen d'évaluation de niveau d'exploitabilité comprenant au moins une combinaison des niveaux d'exposition et de risques d'individualisation, de corrélation, et d'inférence. En substance, lorsque les scores sont élevés, alors l'exploitabilité est facile, et un hacker peut facilement avoir accès à des données personnelles ; et inversement.

Tableau 4 : évaluation des risques d'exploitabilité

| # | Individualisation | Corrélation | Inférence | Exploitabilité |
|---|-------------------|-------------|-----------|----------------|
| 1 | 1-Faible | 1-Faible | 2-Modéré | 1-Très difficile |
| 2 | 3-Elevé | 1-Faible | 4-Très élevé | 2-Difficile |
| 3 | 1-Faible | 1-Faible | 1-Faible | 1-Très difficile |
| 4 | 4-Très élevé | 3-Elevé | 4-Très élevé | 4-Très facile |
| 5 | 3-Elevé | 1-Faible | 3-Elevé | 2-Difficile |
| 6 | 2-Modéré | 3-Elevé | 2-Modéré | 3-Forte |
| 7 | 1-Faible | 3-Elevé | 1-Faible | 2-Difficile |

Une échelle d'évaluation de l'exploitabilité peut être la suivante dans le tableau 5.

Tableau 5 : moyen d'évaluation des risques d'exploitabilité

| Catégorie | Individualisation | Corrélation | Inférence | Exploitabilité |
|---|---|---|---|---|
| Externe élargi (sexe) | 1-Faible | 2-Modéré | 1-Faible | 1-Très difficile |
| Interne élargi (date prélèv.) | 4-Très élevé | 3-Elevé | 4-Très élevé | 4-Très facile |
| Interne restreint (Antibiogr.) | 4-Très élevé | 1-Faible | 4-Très élevé | 2-Difficile |

Un code couleur peut être affecté à l'exploitabilité. Le niveau Très facile est en rouge R, difficile en jaune J, et très difficile en vert V.

Le système d'anonymisation comprend en outre un moyen d'évaluation de risque global du jeu de données dans lequel sont identifiées les données ayant un niveau d'exploitabilité significatif et/ou un niveau de gravité significatif.

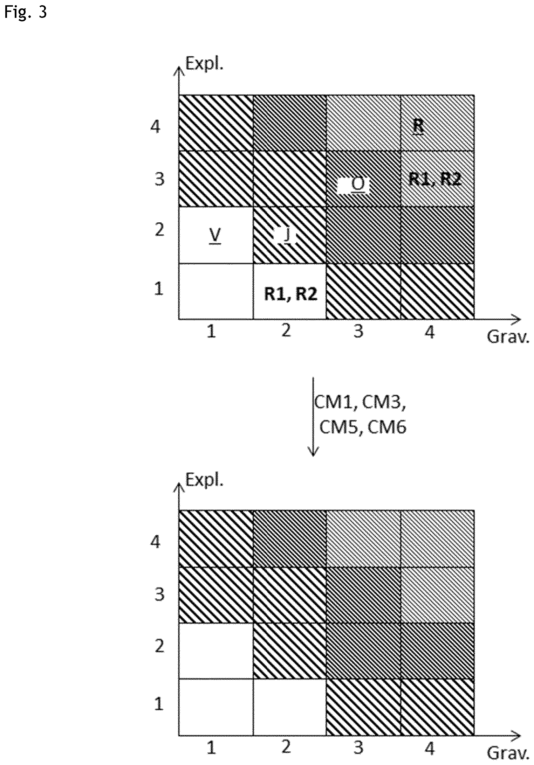

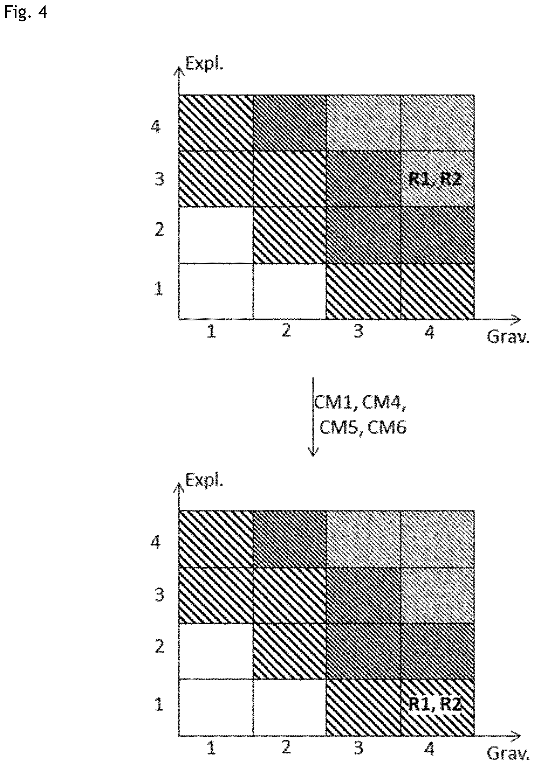

Le niveau d'exploitabilité et le niveau de gravité sont de préférence représentés dans un graphe à deux dimensions (l'une pour chaque niveau), pour permettre de mieux visualiser les risques et comparer facilement des jeux anonymisés. Le graphe comprend de préférence un code couleur de type feu tricolore. Ce type de graphe est illustré en figure 3 et 4.

Le système d'anonymisation comprend en outre un moyen de correction du jeu de données comprenant des propositions, de préférence automatiques, de contre-mesures ou de transformations des données ayant un niveau d'exploitabilité significatif et/ou un niveau de gravité significatif de sorte à réduire ledit niveau.

Le système peut alerter sur les risques d'identification sur les niveaux d'exploitabilité élevés, identifier des vulnérabilités via des premiers modules de vulnérabilité notés D1, D3, etc., et proposer des contremesures correspondantes :

- un module D1 demande de généraliser au maximum les variables impliquant un haut niveau d'exploitabilité (facile) par exemple les variables internes élargies telles que les dates de prélèvement.
- le module D3 identifie les risques de ré-identification liées aux variables internes restreinte.

Le système peut en outre analyser les conformités avec le RGPD au moyen d'au moins un des modules de vulnérabilité spécifiques suivant :

- un module C1 demandant de respecter le principe de minimisation des données (car uniquement les données strictement nécessaires à l'étude doivent être utilisées selon la réglementation, il faudra alors définir une liste des données et de justifier l'usage qui est fait ;
- un module C2 demandant de supprimer les données de personnes spéciales ;
- un module C3 demandant de définir une durée de conservation raisonnable des données selon la finalité du traitement des données ;
- un module C4 demandant de prévoir un mécanisme de purge des données à la fin du traitement des données ;
- un module C5 interdisant l'exportation des données hors du système ;
- un module C6 exigeant une information aux personnes concernées que les données feront l'objet d'une anonymisation ;
- un module C7 alertant sur la localisation des données, car les données doivent être localisées en zone UE, à défaut des clauses contractuelles types ou contraignantes avec le fournisseur de réseau en nuage (cloud) doivent être signées ;
- un module C8 exigeant que la partie prenante s'engage à ne pas essayer de réidentifier les personnes, il peut être couplé au module D3 ;
- un module C9 exigeant un mot de passe à haut niveau de sécurité, par exemple selon les préconisation de l'ANSSI.

Le système d'anonymisation comprend en outre un moyen d'édition d'un rapport R reprenant les risques identifiés et de contre-mesures. Le rapport R reprend automatiquement les éléments d'analyse de risque et sert de preuve pour montrer aux autorités que les risques ont été évalués et minimisés. Le rapport R peut être physique ou électronique.

Exemple R1 :

Par hypothèse, un hackeur exfiltre des données non suffisamment anonymisée après exploitation d'une faiblesse de l'authentification, et réidentifie les personnes concernées sur la base des variables internes élargies.

Le système de l'invention analyse les données et identifie les vulnérabilités des modules D1, D3, C2 et C8 avec un fort risque de ré-identification (par exemple un niveau 4- très facile (rouge).

Un premier jeu de contre-mesures est proposé, pour D1, une contremesure CM1 : généraliser les variables internes élargies ; pour C8, une contremesure CM3 : définir une politique de mot de passe utilisant les standards de l'ANSSI ; pour C2, une contremesure CM5 : supprimer les données de personnes spéciales ; pour D3, des contremesures CM6 : généraliser les variables internes restreintes.

Les contremesures limitent le risque qui passe d'un niveau 4-Critique à un niveau 2-Moyen.

Sur une échelle d'exploitabilité initiale de 3/4, et une échelle de gravité de 4/4 directement visible dans le système (haut de la figure 3), les contremesures baissent l'exploitabilité à 1/4, et la gravité à 3/4 comme l'illustre le bas de la figure 3.

Le système peut proposer des contremesures minimales à prendre en compte, ici CM1 et CM3. Les contremesures maintiennent le risque au niveau 2-Moyen. Dans ce cas, la gravité reste à 4/4, mais l'exploitabilité baisse à 1 /4 comme l'illustre la figure 4.

Exemple R2 :

Par hypothèse, un chercheur ré-identifie les personnes concernées sur la base des variables internes restreintes.

Le système de l'invention analyse les données et identifie les vulnérabilités des modules D1, D3, C2 et C7 avec un fort risque de ré-identification (par exemple un niveau 4- très facile (rouge).

Un premier jeu de contre-mesures est proposé, pour D1, une contremesure CM1 : généraliser les variables internes élargies ; pour D3 et C7, des contremesures CM6 : généraliser les variables internes restreintes et CM4 : prévoir des mesures contractuelles pour l'opérateur qui s'engage à ne pas tenter de réidentifier les personnes ; pour C2, une contremesure CM5 : supprimer les données de personnes spéciales.

Les contremesures limitent le risque qui arrive à un niveau 2-Moyen.

Sur une échelle d'exploitabilité initiale de 3/4, et une échelle de gravité de 4/4 directement visible dans le système, les contremesures baissent l'exploitabilité à 1/4, et la gravité à 3/4 comme l'illustre la figure 3.

Le système propose de préférence des contremesures minimales à prendre en compte, ici CM1 et CM4. Les contremesures maintiennent le risque au niveau 2-Moyen. Dans ce cas, la gravité reste à 4/4, mais l'exploitabilité baisse à 1 /4 comme l'illustre la figure 4.

De préférence, le niveau de corrélation est déterminé en fonction du niveau d'exposition et du niveau d'individualisation sur la base du tableau suivant :

Tableau 6 : évaluation du niveau de corrélation

|  | Exposition | | | |
| --- | --- | --- | --- | --- |
| Individualisation | Interne restr. | Interne élarg. | Ext. restr. | Externe élarg. |
| Très élevée | 1-Faible | 3-Elevé | 4-Très élevé | 4-Très élevé |
| Elevée | 1-Faible | 2-Modéré | 4-Très élevé | 4-Très élevé |
| Modéré | 1-Faible | 2-Modéré | 3-Elevé | 3-Elevé |
| Faible | 1-Faible | 1-Faible | 2-Modéré | 2-Modéré |

De préférence, le niveau d'exploitabilité est déterminé en fonction du niveau de corrélation et du niveau d'inférence sur la base du tableau suivant :

Tableau 7 : évaluation du niveau d'exploitabilité

|  | Exploitabilité | | | |
| --- | --- | --- | --- | --- |
| Inférence | 1-Faible | 2-Modéré | 3-Elevé | 4-Très élevé |
| Très élevée | 2-Difficile | 3-Facile | 4-Très facile | 4-Très facile |
| Elevée | 2-Difficile | 2-Difficile | 3-Facile | 4-Très facile |
| Modéré | 1-Très difficile | 2-Difficile | 3-Facile | 3-Facile |
| Faible | 1-Très difficile | 1 -Très difficile | 2-Difficile | 3-Facile |

De préférence, un niveau d'exploitabilité contextuelle est déterminé en fonction du niveau d'exploitabilité et des remarques et contremesures ci-dessus, sur la base du tableau suivant :

Tableau 8 : évaluation du niveau d'exploitabilité

| | Exploitabilité contextuelle | | | |
|---|---|---|---|---|
| Exploitabilité contextuelle | 1-Faible | 2-Modéré | 3-Elevé | 4-Très élevé |
| Très facile | 2-Difficile | 3-Facile | 4-Très facile | 4-Très facile |
| Facile | 2-Difficile | 2-Difficile | 4-Très facile | 4-Très facile |
| Difficile | 1-Très difficile | 2-Difficile | 3-Facile | 3-Facile |
| Très difficile | 1-Très difficile | 1 -Très difficile | 2-Difficile | 3-Facile |

De préférence, le risque de réidentification (critères légaux d'anonymisation) est déterminé en fonction du niveau de gravité et du niveau d'exploitabilité (de préférence l'exploitabilité contextuelle) sur la base du tableau suivant :

Tableau 9 : évaluation du niveau d'exploitabilité

| | Gravité | | | |
|---|---|---|---|---|
| Exploitabilité | Négligeable | Limitée | Importante | Maximale |
| Très facile | 2-Moyen | 3-Elevée | 4-Critique | 4-Critique |
| Facile | 2-Moyen | 2-Moyen | 3-Elevée | 4-Critique |
| Difficile | 1-Faible | 2-Moyen | 3-Elevée | 3-Elevée |
| Très difficile | 1-Faible | 1-Faible | 2-Moyen | 2-Moyen |

L'invention concerne en outre un procédé d'anonymisation de données personnelles dans au moins un jeu de données d'un utilisateur, sur la base d'un système tel que décrit précédemment.

Le procédé comprend des étapes de mise en oeuvre des différents modules.

Le procédé est mis en oeuvre par ordinateur.

L'invention concerne aussi un programme d'ordinateur pour mettre en oeuvre l'invention via des moyens informatiques.

**Revendications**

1. Système d'anonymisation de données mis en oeuvre par des moyens informatiques, prenant en entrée au moins un jeu de données dans une organisation, le système d'anonymisation comprenant :

   - un moyen de caractérisation des données (M1) sur la base d'un « schéma de données » permettant de définir pour chaque donnée, un nom, un niveau d'exposition sur la base d'un nombre de variables, permettant d'évaluer la possibilité d'accès à la donnée selon qu'elle peut être accessible depuis l'extérieur de l'organisation ou depuis l'intérieur, et de préférence un type de sensibilité de la donnée sur la base de trois variables ;
   - un moyen d'identification d'évènements redoutés (M2) permettant de définir pour chaque donnée, une échelle de gravité à moins de 10 variables se décomposant de préférence en un type d'évènement redouté et/ou une échelle d'impact de cet évènement, évaluée sur la base d'au moins un critère donné ayant un nombre de variables ;
   - un moyen d'évaluation des critères légaux d'anonymisation (M3) permettant de définir pour chaque donnée, un score d'individualisation sur une échelle de moins de 10 valeurs, un score de corrélation sur une échelle de moins de 10 valeurs, et un score d'inférence sur une échelle de moins de 10 valeurs ;
   - un moyen d'évaluation d'un niveau d'exploitabilité (M4) sur la base d'un nombre de valeurs, déterminé sur la base d'une combinaison des niveaux d'exposition et des scores d'individualisation, de corrélation, et d'inférence ;
   - un moyen d'évaluation de risque global (M5) du jeu de données sur la base d'hypothèses de risques construites en s'appuyant sur les données ayant un niveau d'exploitabilité significatif et une échelle de gravité significative ; et
   - un moyen de réduction des risques (M6) comprenant des propositions de contre-mesures ou de transformations permettant de limiter le niveau d'exploitabilité et/ou l'échelle de gravité des données les plus à risque.

2. Système d'anonymisation selon l'une quelconque des revendications précédentes, **caractérisé en ce que** le moyen de caractérisation (M1) permet d'attribuer à chaque donnée un niveau d'exposition sur la base de variables, dont le nombre peut varier entre 2 et 10, de préférence quatre variables, plus préférentiellement parmi :

- un niveau « interne restreint » si la donnée est accessible à un nombre restreint de personnes internes à l'organisation de l'utilisateur ;
- un niveau « interne élargi » si la donnée est accessible à des personnes quelconques internes à l'organisation de l'utilisateur ;
- un niveau « externe restreint » si la donnée est accessible à un nombre restreint de personnes externes à l'organisation de l'utilisateur ;
- un niveau « externe élargi » si la donnée est accessible à des personnes quelconques externes à l'organisation de l'utilisateur.

3.   Système d'anonymisation selon l'une quelconque des revendications précédentes, **caractérisé en ce que** le moyen de caractérisation (M1) permet d'attribuer à chaque donnée un type de sensibilité sur la base de trois variables, de préférence parmi :

- un type donnée sensible si la donnée peut avoir des impacts personnels sur la personne concernée ;
- un type donnée perçue comme sensible si la donnée est perçue comme sensible ;
- un type donnée courante si la donnée est usuelle et non sensible.

4.   Système d'anonymisation selon l'une quelconque des revendications précédentes, **caractérisé en ce que** le moyen d'identification d'évènements redoutés (M2) permet d'attribuer au moins une échelle de gravité à quatre variables, de préférence mineur, significatif, grave, et critique.

5.   Système d'anonymisation selon l'une quelconque des revendications précédentes, **caractérisé en ce que** le moyen d'évaluation des critères légaux d'anonymisation (M3) permet d'attribuer des scores dont le nombre de niveaux peut varier entre 3 et 5, de préférence faible, modéré, élevé, très élevé.

6.   Système d'anonymisation selon l'une quelconque des revendications précédentes, **caractérisé en ce que** le moyen d'évaluation de niveau d'exploitabilité (M4) permet d'attribuer des niveaux d'exploitabilité dont le nombre de valeurs peut varier entre 3 et 5, de préférence très difficile, difficile, facile, très facile.

7.   Système d'anonymisation selon l'une quelconque des revendications précédentes, **caractérisé en ce qu'**il comprend en outre un moyen de génération d'un code couleur (V, J, O, R) avec une échelle d'importance pour au moins un niveau évalué.

8.   Système d'anonymisation selon l'une quelconque des revendications précédentes, **caractérisé en ce qu'**il comprend en outre un moyen d'édition d'un rapport (R) reprenant entre autres les risques identifiés et/ou les contre-mesures (CM1, CM3, CM4, CM5, CM6).

9.   Procédé d'anonymisation de données personnelles dans au moins un jeu de données d'un utilisateur, le procédé d'anonymisation étant mis en oeuvre par des moyens informatiques, et comprenant :

- une étape de caractérisation des données sur la base d'un schéma de données dans lequel à chaque donnée est attribué un nom, un niveau d'exposition sur la base d'un nombre de variables, permettant d'évaluer la possibilité d'accès à la donnée selon qu'elle peut être accessible depuis l'extérieur de l'organisation ou depuis l'intérieur, et de préférence un type de sensibilité de la donnée sur la base de trois variables ;
- une étape d'identification d'évènements redoutés dans laquelle à chaque donnée est attribuée une échelle de gravité à moins de 10 variables se décomposant de préférence en un type d'évènement redouté et/ou une échelle d'impact de cet évènement, évaluée sur la base d'au moins un critère donné ayant un nombre de variables, de préférence au moins l'un parmi le plan matériel, corporel, moral ;
- une étape d'évaluation des critères légaux d'anonymisation dans lequel à chaque donnée est attribué un score d'individualisation sur une échelle de moins de 10 valeurs, un score de corrélation sur une échelle de moins de 10 valeurs, et un score d'inférence sur une échelle de moins de 10 valeurs ;
- une étape d'évaluation de niveau d'exploitabilité d'évaluation d'un niveau d'exploitabilité sur la base d'un nombre de valeurs, déterminé sur la base d'une combinaison des niveaux d'exposition et des score d'individualisation, de corrélation, et d'inférence ;
- une étape d'évaluation de risque global du jeu de données sur la base d'hypothèses de risques construites en s'appuyant sur les données ayant un niveau d'exploitabilité significatif et une échelle de gravité significative ; et

- une étape de réduction des risques comprenant des propositions de contre-mesures ou de transformations permettant de limiter le niveau d'exploitabilité et/ou l'échelle de gravité des données les plus à risque.

10. Programme d'ordinateur comprenant des instructions de code de programme pour l'exécution des étapes d'un procédé d'anonymisation de données selon la revendication 9, lorsque ledit programme fonctionne sur un ordinateur.

Fig. 1

D1-D3
C1-C9
CM1-CM6

M1-M6

M

R

Fig. 2

M1

M2

M3

M4

M5

M6 } CM1 - CM6

Fig. 3

Fig. 4

**EP 4 567 651 A1**

Europäisches
Patentamt

European
Patent Office

Office européen
des brevets

# RAPPORT DE RECHERCHE EUROPEENNE

Numéro de la demande

EP 24 19 6804

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2023/359770 A1 (MCFALL JASON DEREK [GB] ET AL) 9 novembre 2023 (2023-11-09) * alinéa [0338]; revendication 22 * | 1-10 | INV. G06F21/62 |
| A | US 2021/049282 A1 (DI VALENTINO DAVID NICHOLAS MAURICE [CA] ET AL) 18 février 2021 (2021-02-18) * abrégé; revendication 1 * | 1-10 | |
| A | US 11 068 619 B2 (ORANGE [FR]) 20 juillet 2021 (2021-07-20) * colonne 3, ligne 16 - colonne 6, ligne 45 * | 1-10 | |
| A | HARGITAI VIKTOR VIKTORHARG@GMAIL COM ET AL: "Going Beyond Obscurity", PROCEEDINGS OF THE ACM ON HUMAN-COMPUTER INTERACTION, ACMPUB27, NEW YORK, NY, USA, vol. 2, no. CSCW, 1 novembre 2018 (2018-11-01), pages 1-22, XP058496233, DOI: 10.1145/3274335 * le document en entier * | 1-10 | DOMAINES TECHNIQUES RECHERCHES (IPC) G06F |

Le présent rapport a été établi pour toutes les revendications

| Lieu de la recherche | Date d'achèvement de la recherche | Examinateur |
|---|---|---|
| La Haye | 18 décembre 2024 | Raposo Pires, João |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 19 6804

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-12-2024

| Document brevet cité au rapport de recherche | Date de publication | Membre(s) de la famille de brevet(s) | Date de publication |
|---|---|---|---|
| US 2023359770 A1 | 09-11-2023 | CN 109716345 A | 03-05-2019 |
| | | EP 3449414 A1 | 06-03-2019 |
| | | SG 11201809476V A | 29-11-2018 |
| | | US 2020327252 A1 | 15-10-2020 |
| | | US 2023359770 A1 | 09-11-2023 |
| | | WO 2017187207 A1 | 02-11-2017 |
| US 2021049282 A1 | 18-02-2021 | CA 3089835 A1 | 12-02-2021 |
| | | EP 3779757 A1 | 17-02-2021 |
| | | US 2021049282 A1 | 18-02-2021 |
| US 11068619 B2 | 20-07-2021 | EP 3414701 A1 | 19-12-2018 |
| | | FR 3047586 A1 | 11-08-2017 |
| | | US 2019050599 A1 | 14-02-2019 |
| | | WO 2017137689 A1 | 17-08-2017 |

EPO FORM P0460

Pour tout renseignement concernant cette annexe : voir Journal Officiel de l'Office européen des brevets, No.12/82